# EUROPÄISCHE PATENTSCHRIFT

(11) **EP 2 865 258 B1**
(45) Veröffentlichungstag und Bekanntmachung des Hinweises auf die Patenterteilung: **21.09.2016**
(21) Anmeldenummer: 14189302.4
(22) Anmeldetag: 17.10.2014
(51) Int. Cl.: A01D 75/20

(54) **Landwirtschaftliches Arbeitsgerät**
Agricultural implement
Machine agricole

(30) Priorität: 23.10.2013 DE 102013111669
(43) Veröffentlichungstag der Anmeldung: 29.04.2015
(73) Patentinhaber: CLAAS Saulgau GmbH, 88348 Bad Saulgau (DE)
(72) Erfinder: Epp, Siegfried, 88436 Eberhardzell (DE)

(56) Entgegenhaltungen:
- EP-A1- 0 407 757
- DE-A1- 4 014 794
- DE-C2- 1 946 094
- DE-U1- 8 712 165

## Beschreibung

Die Erfindung betrifft ein landwirtschaftliches Mähwerk zur Aufnahme an einer selbstfahrenden landwirtschaftlichen Arbeitsmaschine.

DE 40 14 794 A1 offenbart eine Heuwerbungsmaschine zum Streuen und Wenden von Halm- und Blattgut, mit Rechrädern, die um aufrechte, mit Tasträdern abgestützten Drehachsen abwechselnd gegensinnig angetrieben umlaufen und paarweise zusammenarbeiten und bei der zumindest die äußeren Rechräder und deren benachbarte mittlere Rechräder mit ihren Tragrahmen um waagrecht und in Arbeitsstellung in Arbeitsrichtung ausgerichtete Schwenkachsen gelenkig mit einem Mittelrahmen verbunden sind und von einer im wesentlichen waagrechten Arbeitslage in eine Transportlage verschwenkbar sind, bei der die den äußeren Rechrädern benachbarten mittleren Rechräder im Wesentlichen senkrecht zu ihrer Arbeitslage verschwenkt sind und die äußeren Rechräder darüber hinaus in Richtung auf den mittleren Rahmen nach innen zu weiter verschwenkt sind und sich die Tragrahmen der äußeren Rechräder näherkommen oder berühren, wobei Abweisbügel die Rechräder vorne oberhalb überdecken und ein verschwenkbarer äußerer Abweisbügel an dem Tragrahmen des äußeren Rechrades befestigt ist, der in Arbeitslage des Rechrades zumindest einen Teil des äußeren Bereiches der Fläche überdeckt, die vom Rechrad umschrieben wird und der in der Transportlage des Rechrades durch die Verstellbewegung der Tragrahmen benachbarter Rechräder zueinander weggeschwenkt ist, wobei der äußere Abweisbügel, von der Fläche, die das äußere Rechrad mit den Rechzinken umschreibt, das vordere, äußere Viertel überdeckt und am äußeren Tragrahmen, etwa im Mittelbereich des Rechrades, um eine, im Wesentlichen mit der Drehachse des äußeren Rechrades gleichgerichtete Schwenkachse befestigt ist und mit einem Verstellgestänge gelenkig verbunden ist, das am mittleren Tragrahmen des benachbarten mittleren Rechrades angelenkt ist und beim Verschwenken des äußeren Rechrades von der Arbeitslage in die Transportlage den äußeren Abweisbügel über das vordere innere Viertel der vom äußeren Rechrad umschriebenen Fläche verschwenkt.

Aus DE 19 46 094 C2 ist ein landwirtschaftliches Arbeitsgerät zur Aufnahme an einer selbstfahrenden landwirtschaftlichen Arbeitsmaschine (hier einem Ackerschlepper) bekannt. Das Arbeitsgerät weist einen länglichen Rahmen, der eingerichtet ist, so dass er von der Arbeitsmaschine seiner Länge nach quer zu einer Fahrtrichtung der Arbeitsmaschine und mit einer mit Längsrändern und Breitenrändern des Rahmens definierten ersten Flächenseite des Arbeitsgerätes einer landwirtschaftlichen Feldfläche zugewandt aufnehmbar ist, eine Mehrzahl von Arbeitsorganen, die über die Länge des Rahmens verteilt an diesem gehalten sind, so dass sie eine parallel zur ersten Flächenseite verlaufende Arbeitsebene definieren, und eine Schutzeinrichtung auf, die schwenkbar am Rahmen montiert ist, so dass ein Schutzabschnitt der Schutzeinrichtung um eine sich parallel zur Arbeitsebene erstreckende Schwenkachse verschwenkbar ist.

Die mechanische Realisierung eines solchen Verschwenkens um eine sich parallel zur Arbeitsebene erstreckende Schwenkachse wird jedoch immer schwieriger, da der Rahmen sowie Ausleger und Antriebe der jeweiligen Arbeitsgeräte zunehmend den benötigten Raum zur Realisierung der Verschwenkung in Anspruch nehmen. Eine Verschwenkung der Schutzeinrichtung ist jedoch insbesondere im Hinblick auf gesetzlich vorgegebene Grenzen hinsichtlich der Konfiguration des Arbeitsgerätes bei Transportfahrten im Straßenverkehr (wie z.B. Transporthöhe, Transportbreite und Achslast) sinnvoll, um die immer größeren Arbeitsbreiten (Länge des Rahmens) der landwirtschaftlichen Arbeitsgeräte realisieren zu können. Dies ist insbesondere deshalb so, da sich bei landwirtschaftlichen Arbeitsgeräten wie z.B. Mähbalken die Schutzeinrichtung mit einem Sicherheitsabstand zu den Arbeitsorganen um den Rahmen erstrecken kann, so dass sie z.B. dessen Länge vergrößert und damit im Transportfall auch die Transportbreite bzw. bei Vertikalstellung die Transporthöhe des Arbeitsgerätes vergrößert.

Der Erfindung liegt die Aufgabe zugrunde, ein landwirtschaftliches Arbeitsgerät zur Aufnahme an einer selbstfahrenden landwirtschaftlichen Arbeitsmaschine zu schaffen, bei dem eine Schutzeinrichtung vorgesehen ist, welche für den Transportfall in einfacher Weise in eine insbesondere abmessungsreduzierende Verstauposition verbringbar ist.

Dies wird mit einem landwirtschaftlichen Mähwerk gemäß Anspruch 1 bzw. 10
erreicht. Weiterbildungen der Erfindung sind in den abhängigen Ansprüchen definiert.

Gemäß der Erfindung weist ein landwirtschaftliches Arbeitsgerät in Form eines landwirtschaftlichen Mähwerks einen länglichen Rahmen, der eingerichtet ist, so dass er von einer landwirtschaftlichen Arbeitsmaschine seiner Länge nach quer zu einer Fahrtrichtung der Arbeitsmaschine und mit einer mit Längsrändern und Breitenrändern des Rahmens definierten ersten Flächenseite des Arbeitsgerätes einer landwirtschaftlichen Feldfläche zugewandt aufnehmbar ist; eine Mehrzahl von Arbeitsorganen, die über die Länge des Rahmens verteilt an diesem gehalten sind, so dass sie eine parallel zur ersten Flächenseite verlaufende Arbeitsebene definieren; und eine Schutzeinrichtung auf, die um eine sich winklig zur Arbeitsebene erstreckende Schwenkachse schwenkbar am Rahmen montiert ist, so dass ein Schutzabschnitt der Schutzeinrichtung zwischen einer Schutzposition, in der der Schutzabschnitt eine mit Breitenrändern und Höhenrändern des Rahmens definierte Längsendenseite des Arbeitsgerätes zumindest teilweise abdeckt, und einer Verstauposition verschwenkbar ist, in der Schutzabschnitt unter Freigabe der Längsendenseite entlang der Länge des Rahmens angeordnet ist.

Durch die erfindungsgemäße Realisierung der Verschwenkbarkeit kann die Schutzeinrichtung für einen Transportfall in einfacher Weise in eine abmessungsreduzierende Verstauposition verbracht werden und kann dadurch eine größere Arbeitsbreite des Arbeitsgerätes vorkonfiguriert werden.

Das erfindungsgemäße Arbeitsgerät ist als Mähwerk ausgebildet.
Das erfindungsgemäße Arbeitsgerät kann außerdem als heckseitig oder als frontseitig von einer Arbeitsmaschine wie einem Traktor aufzunehmendes Arbeitsgerät ausgebildet sein. Zudem kann das erfindungsgemäße Arbeitsgerät als einbalkiges nichtklappbares Arbeitsgerät oder auch als einbalkiges oder mehrbalkiges, insbesondere zweibalkiges, für eine Transportstellung klappbares bzw. verschwenkbares Arbeitsgerät ausgebildet sein.

Gemäß der Erfindung kann die Verschwenkbewegung der Schutzeinrichtung sowohl manuell bzw. von Hand durch einen Bediener als auch motorisch angetrieben realisiert werden. Ein motorischer Antrieb kann z.B. elektrisch, elektromagnetisch, hydraulisch pneumatisch oder via Federkraft oder durch eine Kombination dieser Möglichkeiten realisiert werden.
Gemäß einer Ausführungsform der Erfindung ist der Schutzabschnitt an der Schwenkachse so verschwenkbar, dass er in der Verstauposition an eine Längsseite des Rahmens geschwenkt ist. Auf diese Weise beeinflusst der Schutzabschnitt in der Verstauposition nicht mehr die Länge des Arbeitsgerätes und ist außerdem eng anliegend bzw. nicht vorstehend am Arbeitsgerät angeordnet, so dass das Arbeitsgerät in der für den Transportfall herzustellenden Transportstellung sehr kompakt und gut transportierbar ist.

Gemäß einer alternativen Ausführungsform der Erfindung ist der Schutzabschnitt an der Schwenkachse so verschwenkbar, dass er in der Verstauposition über eine von der ersten Flächenseite abgewandte mit Längsrändern und Breitenrändern des Rahmens definierte zweite Flächenseite des Arbeitsgerätes geschwenkt ist. Auch in dieser Ausgestaltung beeinflusst der Schutzabschnitt in der Verstauposition nicht mehr die Länge des Arbeitsgerätes und ist außerdem innerhalb der Umrisskonturen bzw. nicht vorstehend am Arbeitsgerät angeordnet, so dass das Arbeitsgerät in der für den Transportfall herzustellenden Transportstellung sehr kompakt und gut transportierbar ist.

Gemäß einer weiteren Ausführungsform der Erfindung ist der Schutzabschnitt an der Schwenkachse so verschwenkbar, dass er in der Verstauposition mit Abstand von den auf dieser Längenposition des Rahmens befindlichen Arbeitsorganen angeordnet ist. Auf diese Weise kann der Schutzabschnitt leichter z.B. über die zweite Flächenseite geschwenkt werden und es wird sichergestellt, dass der Schutzabschnitt nicht versehentlich in die z.B. rotierenden Arbeitsorgane gelangt.

Gemäß noch einer Ausführungsform der Erfindung ist die Schwenkachse mit Abstand von der in der Schutzposition zumindest teilweise abgedeckten Längsendenseite am Rahmen angeordnet sowie in Richtung der Länge des Rahmens und zur Längsendenseite dessen hin in Bezug auf die Arbeitsebene winklig mit einem Winkel von maximal 90 Grad angeordnet.

Durch diese in Längsrichtung des Rahmens von der Längsendenseite beabstandete und winklige Anordnung der Schwenkachse kann in einfacher Weise durch Vorsehen eines den Schutzabschnitt haltenden mit der Schwenkachse verbundenen Schwenkarms (wie z.B. eines Schutzbügels) die Verlagerung des Schutzabschnitts zwischen Schutzposition und Verstauposition realisiert werden.

Gemäß noch einer weiteren Ausführungsform der Erfindung ist die Schwenkachse in Richtung der Länge des Rahmens und zur Längsendenseite dessen hin in Bezug auf die Arbeitsebene in einem spitzen Winkel angeordnet. Durch die spitzwinklige Anordnung der Schwenkachse in Bezug auf die Arbeitsebene bzw. die Flächenseiten kann mit einem Verschwenken der Schutzeinrichtung in die Verstauposition der Schwenkarm in eine Position verbracht werden, in der er sich ausgehend von der Schwenkachse schräg nach oben erstreckt, wodurch der Schutzabschnitt mit dem Verschwenken um ein vorbestimmtes Hubmaß angehoben wird. Somit wird auf einfache Weise realisiert, dass der Schutzabschnitt in der Verstauposition mit Abstand von den auf dieser Längenposition des Rahmens befindlichen Arbeitsorganen angeordnet ist.

Gemäß einer Ausführungsform der Erfindung ist der Schutzabschnitt der Schutzeinrichtung in einer Breitenrichtung des Rahmens geteilt, so dass zwei Teilschutzsektionen gebildet sind, von denen eine Teilschutzsektion um die eine Schwenkachse schwenkbar am Rahmen montiert ist und die andere Teilschutzsektion um eine weitere Schwenkachse schwenkbar am Rahmen montiert ist, wobei die weitere Schwenkachse sich in gleichem Winkel wie die eine Schwenkachse winklig zur Arbeitsebene erstreckt.

Durch die Teilung der Schutzeinrichtung können auf vorteilhafte Weise die jeweils beim Verschwenken bewegten Massen reduziert werden und kann damit die Konstruktion leichter und dennoch stabil ausgeführt werden.

Gemäß noch einer Ausführungsform der Erfindung sind die beiden Schwenkachsen in Breitenrichtung gesehen in einer Linie angeordnet. Dies erleichtert einerseits den Antrieb für die Verschwenkung (z.B. mittels einer gemeinsamen Antriebseinheit) und beeinflusst andererseits vorteilhaft die Kompaktheit des Arbeitsgerätes.

Gemäß einer weiteren Ausführungsform der Erfindung deckt der Schutzabschnitt der Schutzeinrichtung die Längsendenseite des Arbeitsgerätes in der Schutzposition vollständig ab. Diese Ausgestaltung der Erfindung stellt sicher, dass sowohl die abmessungsreduzierende Verstauposition für die Transportstellung des Arbeitsgerätes als auch die abschirmende Schutzposition für eine Arbeitsstellung des Arbeitsgerätes mit einer einzigen Verschwenkbewegung darstellbar ist. Dadurch wird die Bedienbarkeit des Arbeitsgerätes vereinfacht und dessen Komplexität reduziert.

Gemäß noch einer weiteren Ausführungsform der Erfindung weist das landwirtschaftliche Arbeitsgerät eine weitere Schutzeinrichtung auf, die in gleicher Weise wie die eine Schutzeinrichtung ausgebildet (d.h. analog zu einer der o.g. Ausführungsformen der Erfindung) um eine sich winklig zur Arbeitsebene erstreckende Schwenkachse schwenkbar am Rahmen montiert ist, so dass ein Schutzabschnitt der weiteren Schutzeinrichtung zwischen einer Schutzposition, in der der Schutzabschnitt eine mit Breitenrändern und Höhenrändern des Rahmens definierte weitere Längsendenseite des Arbeitsgerätes zumindest teilweise abdeckt, und einer Verstauposition verschwenkbar ist, in der Schutzabschnitt unter Freigabe der weiteren Längsendenseite entlang der Länge des Rahmens angeordnet ist.

Diese Ausgestaltung der Erfindung, bei der durch das Verschwenken der beiden Schutzeinrichtungen in ihre jeweiligen Verstaupositionen die Gesamtlänge des Mähbalkens auf beiden Seiten verkürzt wird, erlaubt eine noch größer vorkonfigurierte Arbeitsbreite des Arbeitsgerätes. Besonders vorteilhaft ist diese Ausgestaltung der Erfindung anwendbar bei Ausführung des Arbeitsgerätes als einbalkiges nichtklappbares Arbeitsgerät hinsichtlich der Einhaltung einer maximalen Transportbreite.

Gemäß noch einer Ausführungsform der Erfindung ist der zur Längsendenseitenabdeckung vorgesehene Schutzabschnitt jeder Schutzeinrichtung mit einer flexiblen Materialbahn (z.B. aus Kunststoff) gebildet.

Gemäß einer weiteren Ausführungsform der Erfindung weist das Mähwerk nach einer, mehreren oder allen zuvor beschriebenen Ausführungsformen der Erfindung in jeder denkbaren Kombination, auf: einen länglichen Rahmen, der eingerichtet ist, so dass er von einer landwirtschaftlichen Arbeitsmaschine seiner Länge nach quer zu einer Fahrtrichtung der Arbeitsmaschine aufnehmbar ist, so dass ein Längsende des Rahmens an der Arbeitsmaschine derart angelenkt ist, dass das Arbeitsgerät bezüglich seiner Längserstreckung zwischen einer liegenden Arbeitsstellung zum Durchführen landwirtschaftlicher Feldarbeit und einer hochgestellten Transportstellung zum Transportieren des Arbeitsgerätes verschwenkbar ist; eine Mehrzahl von Arbeitsorganen, die über die Länge des Rahmens verteilt an diesem gehalten sind; und eine Schutzeinrichtung, die am Rahmen an dem zur Anlenkung an der Arbeitsmaschine vorgesehenen Längsende montiert ist, so dass die Schutzeinrichtung zwischen einer Schutzposition zum in der Arbeitsstellung Bereitstellen einer Abschirmung für die an diesem Längsende angeordneten Arbeitsorgane und unter zumindest teilweiser Aufhebung dieser Abschirmung einer Verstauposition für die Transportstellung verlagerbar ist.
Durch die Erfindung wird somit ein landwirtschaftliches Arbeitsgerät zur Aufnahme an einer selbstfahrenden landwirtschaftlichen Arbeitsmaschine bereitgestellt, bei dem eine an einem zur Anlenkung an einer Arbeitsmaschine vorgesehenen Längsende angeordnete Schutzeinrichtung für den Transportfall in eine Verstauposition verbringbar ist.

Das erfindungsgemäße Arbeitsgerät kann z.B. als Mähwerk oder als Wender usw. ausgebildet sein. Das erfindungsgemäße Arbeitsgerät ist dabei bevorzugt als heckseitig von einer Arbeitsmaschine wie einem Traktor aufzunehmendes Arbeitsgerät ausgebildet. Außerdem kann das erfindungsgemäße Arbeitsgerät als einbalkiges oder als mehrbalkiges, insbesondere zweibalkiges, für eine Transportstellung klappbares bzw. verschwenkbares Arbeitsgerät ausgebildet sein.

Gemäß der Erfindung kann die Verlagerung der Schutzeinrichtung sowohl manuell bzw. von Hand durch einen Bediener als auch motorisch angetrieben realisiert werden. Ein motorischer Antrieb kann z.B. elektrisch, elektromagnetisch, hydraulisch pneumatisch oder via Federkraft oder durch eine Kombination dieser Möglichkeiten realisiert werden.

Gemäß der Erfindung ist in der Arbeitsstellung das Arbeitsgerät bzw. der Rahmen dessen bezüglich seiner Längserstreckung liegend, d.h. im Wesentlichen horizontal und mit einer mit Längsrändern und Breitenrändern des Rahmens definierten ersten Flächenseite des Arbeitsgerätes einer landwirtschaftlichen Feldfläche zugewandt, ausgerichtet. In der Transportstellung ist das Arbeitsgerät bzw. der Rahmen dessen bezüglich seiner Längserstreckung hochgestellt, d.h. im Wesentlichen vertikal bzw. leicht gegenüber der Vertikalen geneigt, ausgerichtet.

Da die in die Verstauposition verbringbare Schutzeinrichtung an dem in der Transportstellung des Arbeitsgerätes unten angeordneten Längsende des Arbeitsgerätes vorgesehen ist, kann in der Verstauposition ggf. vorteilhaft verhindert werden, dass Teile der Schutzeinrichtung auf einer Transportstraße schleifen und dadurch beschädigt werden.

Die Erfindung erstreckt sich ausdrücklich auch auf solche Ausführungsformen, welche nicht durch Merkmalskombinationen aus expliziten Rückbezügen der Ansprüche gegeben sind, womit die offenbarten Merkmale der Erfindung - soweit dies technisch sinnvoll ist - beliebig miteinander kombiniert sein können.

Im Folgenden wird die Erfindung anhand bevorzugter Ausführungsformen und unter Bezugnahme auf die beigefügten Figuren detaillierter beschrieben.
- Fig.1: zeigt eine schematisierte Draufsicht eines landwirtschaftlichen Arbeitsgerätes gemäß einer ersten Ausführungsform der Erfindung, wobei sich eine Schutzeinrichtung dieser in einer Schutzposition befindet.
- Fig.2: zeigt eine schematisierte Draufsicht des landwirtschaftlichen Arbeitsgerätes von Fig.1, wobei sich die Schutzeinrichtung in einer Verstauposition befindet.
- Fig.3: zeigt eine schematisierte Draufsicht eines landwirtschaftlichen Arbeitsgerätes gemäß einer zweiten Ausführungsform der Erfindung, wobei sich eine Schutzeinrichtung dieser in einer Schutzposition befindet.
- Fig.4: zeigt eine schematisierte Draufsicht des landwirtschaftlichen Arbeitsgerätes von Fig.3, wobei sich die Schutzeinrichtung in einer Verstauposition befindet.
- Fig.5: zeigt eine schematisierte Draufsicht eines landwirtschaftlichen Arbeitsgerätes gemäß einer dritten Ausführungsform der Erfindung, wobei sich eine Schutzeinrichtung dieser in einer Schutzposition befindet.
- Fig.6: zeigt eine schematisierte Draufsicht des landwirtschaftlichen Arbeitsgerätes von Fig.5, wobei sich die Schutzeinrichtung in einer Verstauposition befindet.
- Fig.7: zeigt eine schematisierte Draufsicht eines landwirtschaftlichen Arbeitsgerätes gemäß einer vierten Ausführungsform der Erfindung, wobei sich Schutzeinrichtungen dieser in jeweiligen Schutzpositionen befinden.
- Fig.8: zeigt eine schematisierte allgemeine Längsseitenansicht eines erfindungsgemäßen landwirtschaftlichen Arbeitsgerätes.
- Fig.9: zeigt eine schematisierte allgemeine Ansicht eines in eine Transportstellung verbrachten erfindungsgemäßen landwirtschaftlichen Arbeitsgerätes.

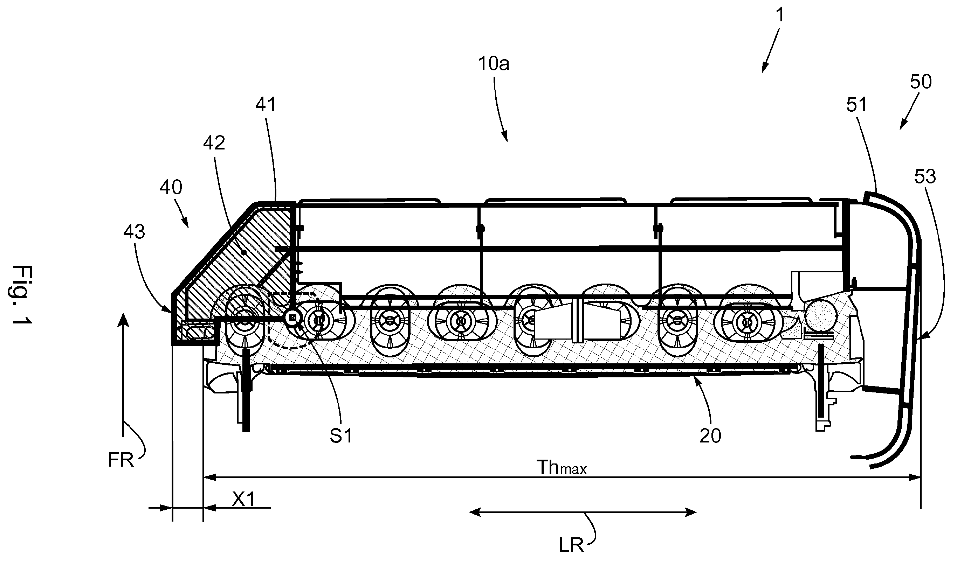

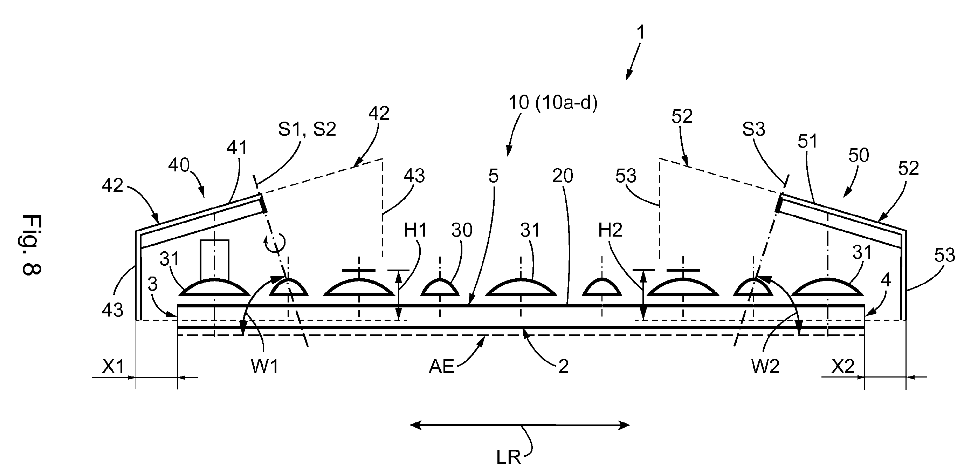

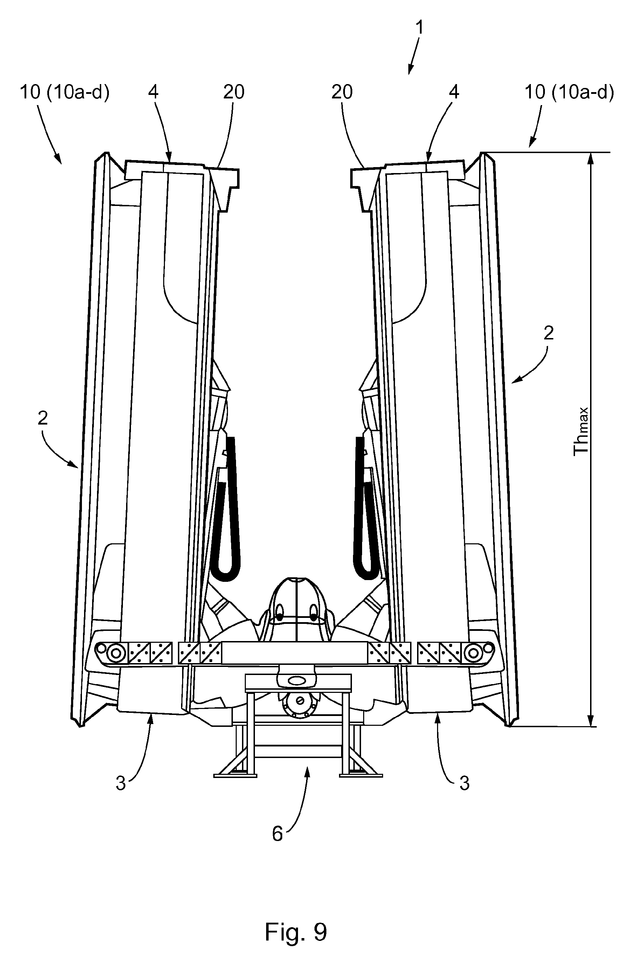

Im Folgenden wird unter Bezugnahme auf die Figuren 8 und 9 allgemein ein erfindungsgemäßes landwirtschaftliches Arbeitsgerät 1 zur Aufnahme an einer selbstfahrenden landwirtschaftlichen Arbeitsmaschine (nicht gezeigt) beschrieben, wobei die Arbeitsmaschine vorzugsweise ein landwirtschaftlicher Schlepper oder Traktor ist. Wie in Fig.8 und Fig.9 gezeigt, in welchen das Arbeitsgerät 1 in horizontaler Blickrichtung und von hinten in Bezug auf eine Fahrtrichtung FR (siehe z.B. Fig.1) der Arbeitsmaschine dargestellt ist, ist das Arbeitsgerät 1 als Heckmähwerk ausgebildet und kann ein oder zwei Mähbalken 10 aufweisen.

Das Arbeitsgerät 1 wird vorzugsweise mittels eines Traggestells 6 an der Arbeitsmaschine aufgenommen, insbesondere an einer allgemein bekannten Dreipunktanhängeeinrichtung, wie sie bei landwirtschaftlichen Arbeitsmaschinen - wie Schleppern, Traktoren o. ä. - im Heck- und/oder Frontbereich vorgesehen sind. Das Arbeitsgerät 1 ist vorzugsweise schwenkbar bzw. drehbar an das Traggestell angelenkt und an den entsprechenden Lenkern können weitere Dreh- und/oder Schwenkachsen vorgesehen sein, um das Arbeitsgerät 1 für den Transport in eine raumsparende Position verlagern zu können, mit der die zulässigen Transportmaße eingehalten werden.

Jeder Mähbalken 10 weist einen länglichen Rahmen 20 auf, der eingerichtet ist, so dass er von der Arbeitsmaschine heckseitig seiner Länge nach quer zur Fahrtrichtung FR der Arbeitsmaschine an dieser aufnehmbar ist. Mit anderen Worten verläuft zumindest in einer Arbeitsstellung eine Längsrichtung LR jedes Mähbalkens 10 quer zur Fahrtrichtung FR der Arbeitsmaschine. Für den Transport des Arbeitsgeräts 1 können die Rahmen 20 auch nach hinten geschwenkt und parallel zur Fahrtrichtung ausgerichtet sein.

Jeder Mähbalken 10 ist so ausgebildet, dass er an der Arbeitsmaschine aufgenommen zwischen einer Arbeitsstellung (siehe Fig.8), in welcher der Mähbalken 10 in etwa horizontal ausgerichtet ist, so dass eine mit Längsrändern und Breitenrändern des Rahmens 20 definierte ersten Flächenseite 2 des Arbeitsgerätes 1 einer landwirtschaftlichen Feldfläche (nicht dargestellt) zugewandt ist, und einer Transportstellung (siehe Fig.9) verschwenkbar ist, in welcher der Mähbalken 10 in etwa vertikal bzw. leicht gegenüber der Vertikalen geneigt ausgerichtet ist. Insbesondere wenn nur ein Mähwerk am Heck der Arbeitsmaschine angeordnet ist, kann dieses für den Transport so weit über die Vertikale hinaus verschwenkt werden, dass die maximal zulässige Fahrzeugbreite ausgenutzt wird, um die maximal zulässige Transporthöhe nicht zu überschreiten. Dabei können Schwenk- bzw. Klappwinkel von etwa 130 Winkelgraden in Bezug auf die Arbeitsebene erreicht werden. Das gleiche gilt sinngemäß auch umgekehrt in Bezug auf die Transportbreite.

Neben der in Fig. 9 dargestellten Transportposition, wo die Rahmen 20 bzw. die Mähbalken 10 in ihrer Längsrichtung vertikal aufgestellt sind, können auch Transportpositionen mit im Wesentlichen nach hinten geschwenkten und längs bzw. parallel zur Fahrtrichtung ausgerichteten Mähbalken vorgesehen werden. Dabei können die Mähbalken zusätzlich um ihre Längsachse in eine vertikale Ausrichtung verdreht werden, um die Transportbreite zu reduzieren.

Jeder Mähbalken 10 weist außerdem eine Mehrzahl von Arbeitsorganen 30, 31 (hier z.B. unterschiedliche drehangetriebene Schneidscheiben oder -trommeln) auf, die über die Länge (entlang der Längsrichtung LR) des Rahmens 20 verteilt an diesem gehalten sind, so dass sie eine parallel zur ersten Flächenseite 2 verlaufende Arbeitsebene AE definieren, in der z.B. der Mähvorgang mittels der Arbeitsorgane 30, 31 stattfindet. Die Mehrzahl von Arbeitsorganen kann auch aus einem Messerbalken mit einer Mehrzahl von Schneiden bestehen, der mit einem weiteren Messerbalken oder mit fingerförmigen Gegenhaltern zusammenwirkt.

Darüber hinaus weist jeder Mähbalken 10 mehrere Schutzeinrichtungen auf, die zum Schutz gegen die Schneid-, Greif- und/oder Schleuderwirkung von angetrieben Elementen wie insbesondere den Arbeitsorganen 30, 31 vorgesehen sind, um den Mähbalken 10 in der Arbeitsstellung an der Oberseite und an den umlaufenden Rändern abzuschirmen. Da für die Erfindung nicht alle dieser Schutzvorrichtungen relevant sind, werden im Folgenden nur zwei dieser beschrieben.

Jeder Mähbalken 10 hat eine erste Schutzeinrichtung 40, welche einen rahmenbildenden Schutzbügel 41, der mit einer z.B. aus Kunststoff hergestellten flexiblen Materialbahn bespannt ist, so dass ein die Oberseite des Mähbalkens 10 teilweise abdeckender erster oberer Schutzabschnitt 42 gebildet ist, und einen an einem äußeren Längsrand des Schutzbügels 41 befestigten und frei davon herabhängenden ersten seitlichen Schutzabschnitt 43 aufweist, der mit einer z.B. aus Kunststoff hergestellten flexiblen Materialbahn gebildet ist und der eine mit Breitenrändern und Höhenrändern des Rahmens 20 definierte erste Längsendenseite 3 des Mähbalkens 10 in einer Schutzposition zumindest teilweise abdeckt. Wie aus Fig.8 ersichtlich, weist der erste seitliche Schutzabschnitt 43 einen ersten Sicherheitsabstand X1 zu dem linksseitig äußeren Arbeitsorgan 31 bzw. dem Rahmen 20 auf, so dass er in der Schutzposition die Länge des Mähbalkens 10 um den ersten Sicherheitsabstand X1 vergrößert.

Jeder Mähbalken 10 hat außerdem eine zweite Schutzeinrichtung 50, welche einen rahmenbildenden Schutzbügel 51, der mit einer z.B. aus Kunststoff hergestellten flexiblen Materialbahn bespannt ist, so dass ein die Oberseite des Mähbalkens 10 teilweise abdeckender zweiter oberer Schutzabschnitt 52 gebildet ist, und einen an einem äußeren Längsrand des Schutzbügels 51 befestigten und frei davon herabhängenden zweiten seitlichen Schutzabschnitt 53 aufweist, der mit einer z.B. aus Kunststoff hergestellten flexiblen Materialbahn gebildet ist und der eine mit Breitenrändern und Höhenrändern des Rahmens 20 definierte zweite Längsendenseite 4 des Mähbalkens 10 in einer Schutzposition zumindest teilweise abdeckt. Wie aus Fig.8 ersichtlich, weist der zweite seitliche Schutzabschnitt 53 einen zweiten Sicherheitsabstand X2 zu dem rechtsseitig äußeren Arbeitsorgan 31 bzw. dem Rahmen 20 auf, so dass er in der Schutzposition die Länge des Mähbalkens 10 um den zweiten Sicherheitsabstand X2 vergrößert.

Im Fazit der Betrachtung der allgemeinen konstruktiven Ausgestaltung des erfindungsgemäßen Arbeitsgerätes ist der Rahmen 20 so eingerichtet ist, dass dessen die erste Längsendenseite 3 aufweisendes Längsende, wenn an der Arbeitsmaschine aufgenommen, derart heckseitig an dieser angelenkt ist, dass das Arbeitsgerät 1 bezüglich seiner Längserstreckung zwischen der liegenden Arbeitsstellung zum Durchführen landwirtschaftlicher Feldarbeit und der hochgestellten oder nach hinten gedrehten Transportstellung zum Transportieren des Arbeitsgerätes 1 verschwenkbar ist.

Die erste Schutzeinrichtung 40 kann dabei, wie z.B. in Fig.8 gezeigt und später in den Ausführungsformen der Erfindung noch detaillierter beschrieben, am Rahmen 20 an dem zur Anlenkung an der Arbeitsmaschine vorgesehenen Längsende (welches die erste Längsendenseite 3 aufweist - siehe auch Fig.9) so montiert sein, dass die erste Schutzeinrichtung 40 zwischen einer Schutzposition (in Fig.8 in Volllinie dargestellt) zum in der Arbeitsstellung Bereitstellen einer Abschirmung für das an diesem Längsende angeordnete linksseitig äußere (Fig.8) Arbeitsorgan 31 und unter zumindest teilweiser Aufhebung dieser Abschirmung einer Verstauposition (in Fig.8 in Strichlinie dargestellt) für die Transportstellung verlagerbar ist.

Außerdem kann die zweite Schutzeinrichtung 50, wie z.B. in Fig.8 gezeigt und später in den Ausführungsformen der Erfindung noch detaillierter beschrieben, am Rahmen 20 an dem nicht zur Anlenkung an der Arbeitsmaschine vorgesehenen entgegengesetzten Längsende (welches die zweite Längsendenseite 4 aufweist - siehe auch Fig.9) so montiert sein, dass die zweite Schutzeinrichtung 50 zwischen einer Schutzposition (in Fig.8 in Volllinie dargestellt) zum in der Arbeitsstellung Bereitstellen einer Abschirmung für das an diesem Längsende angeordnete rechtsseitig äußere (Fig.8) Arbeitsorgan 31 und unter zumindest teilweiser Aufhebung dieser Abschirmung einer Verstauposition (in Fig.8 in Strichlinie dargestellt) für die Transportstellung verlagerbar ist.

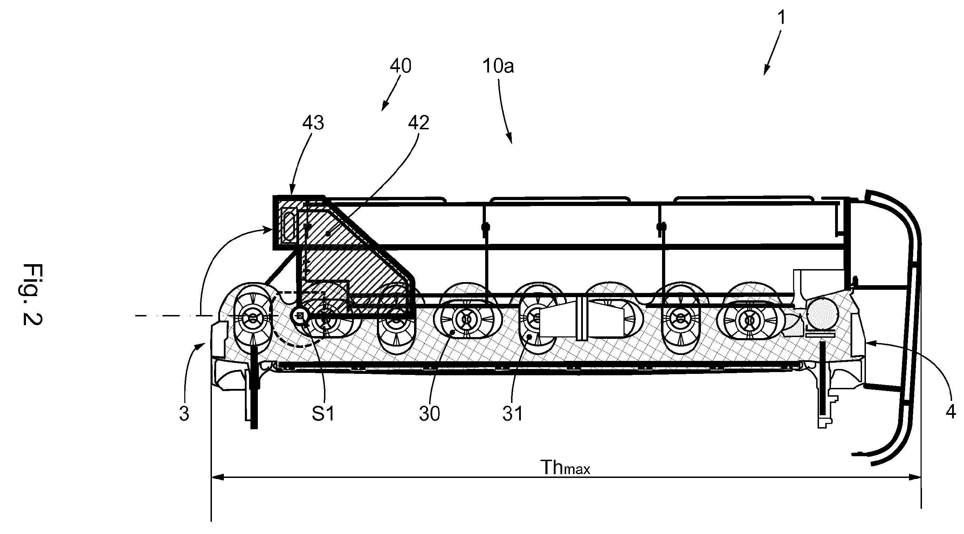

Nun wird unter zusätzlicher Bezugnahme auf die Figuren 1 und 2 eine erste Ausführungsform des erfindungsgemäßen landwirtschaftlichen Arbeitsgerätes 1 beschrieben werden. Zur Darstellung der Spezifik wird nun der zuvor beschriebene allgemeine Mähbalken 10 spezifisch als Mähbalken 10a bezeichnet.

Wie aus den Figuren 1, 2 und 9 ersichtlich, ist gemäß der ersten Ausführungsform der Erfindung die erste Schutzeinrichtung 40 um eine sich winklig in einem Winkel W1 (siehe Fig.8) zur Arbeitsebene AE erstreckende Schwenkachse S1 schwenkbar am Rahmen 20 montiert, so dass die erste Schutzeinrichtung 40 um die Schwenkachse S1 zwischen der beim Arbeiten in der Arbeitsstellung einzunehmenden Schutzposition und einer beim Transport in der Transportstellung des Mähbalkens 10a bzw. des Arbeitsgerätes 1 einzunehmenden Verstauposition verschwenkbar ist.

Die Schwenkachse S1 ist mit Abstand von der in der Schutzposition teilweise abgedeckten ersten Längsendenseite 3 am Rahmen 20 angeordnet sowie in Richtung der Länge des Rahmens 20 und zur ersten Längsendenseite 3 dessen hin in Bezug auf die Arbeitsebene AE winklig mit dem Winkel W1 von maximal 90 Grad angeordnet. Gemäß der ersten Ausführungsform der Erfindung beträgt der Winkel W1, in dem die Schwenkachse S1 zur Arbeitsebene AE angeordnet ist, etwa 90 Grad.

Im Detail ist in der Schutzposition (Fig.1) der erste obere Schutzabschnitt 42 über einer von der ersten Flächenseite 2 abgewandten mit Längsrändern und Breitenrändern des Rahmens 20 definierten zweiten Flächenseite 5 des Mähbalkens 10a angeordnet. Außerdem ist in der Schutzposition der erste seitliche Schutzabschnitt 43 mit dem ersten Sicherheitsabstand X1 von dem linksseitig äußeren Arbeitsorgan 31 bzw. der ersten Längsendenseite 3 seitlich neben dem Mähbalken 10a angeordnet, so dass der erste seitliche Schutzabschnitt 43 die erste Längsendenseite 3 teilweise abdeckt.

In der Verstauposition (Fig.2) ist der erste obere Schutzabschnitt 42 um 90 Grad um die Schwenkachse S1 zur Längsmitte des Mähbalkens 10a hin verschwenkt über der zweiten Flächenseite (5, Fig. 8) des Mähbalkens 10a angeordnet. Außerdem ist in der Verstauposition der erste seitliche Schutzabschnitt 43 unter Freigabe der ersten Längsendenseite 3 entlang der Länge des Rahmens 20 angeordnet, d.h. um 90 Grad um die Schwenkachse S1 an die eine Längsseite des Rahmens 20 bzw. des Mähbalkens 10a geschwenkt.

Wie aus den Figuren 1, 2 und 9 ersichtlich, wird durch das Verschwenken der ersten Schutzeinrichtung 40 in die Verstauposition die Gesamtlänge des Mähbalkens 10a um den ersten Sicherheitsabstand X1 verkürzt, so dass unter Einhaltung einer maximalen Transporthöhe Thmax in der Transportstellung (siehe Fig. 9) des Mähbalkens 10a bzw. des Arbeitsgerätes 1 der Mähbalken 10a insgesamt Länger bzw. mit größerer Arbeitsbreite ausgeführt werden kann. Gleiches würde bei Ausführung des Arbeitsgerätes als einbalkiges nichtklappbares Frontmähwerk (frontseitig an der Arbeitsmaschine aufzunehmen) hinsichtlich der Einhaltung einer maximalen Transportbreite gelten, was später noch detaillierter erörtert werden wird.

Da die erste Schutzeinrichtung 40 auf der in der Transportstellung des als Heckmähwerk ausgebildeten Mähbalkens 10a des Arbeitsgerätes 1 unten angeordneten erste Längsendenseite 3 des Mähbalkens 10a vorgesehen ist, wird zudem in der Verstauposition verhindert, dass der erste seitliche Schutzabschnitt 43 unter zusätzlicher Verlängerung des Mähbalkens 10a nach unten hängt und ggf. auf einer Transportstraße schleift.

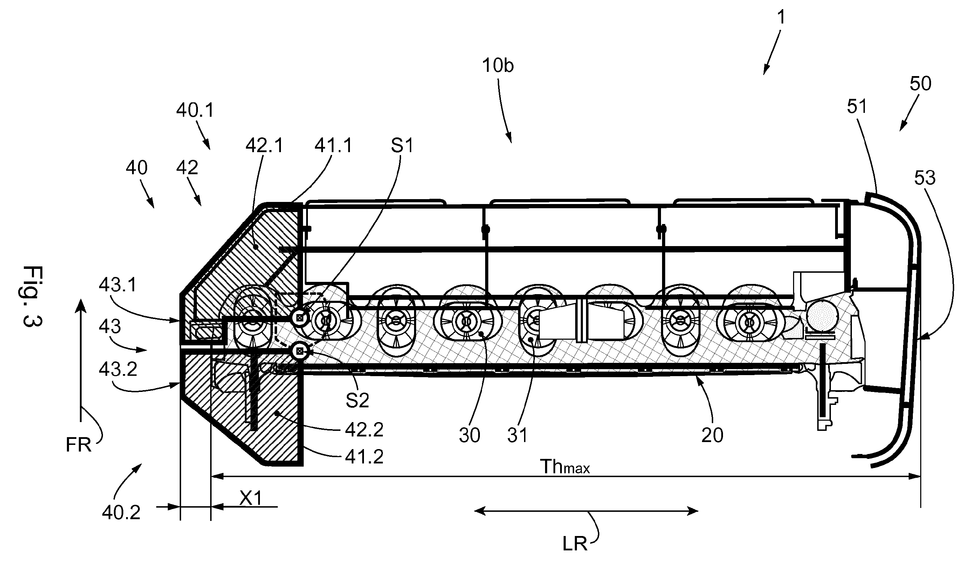

Nun wird unter Bezugnahme auf die Figuren 3, 4, 8 und 9 eine zweite Ausführungsform des erfindungsgemäßen landwirtschaftlichen Arbeitsgerätes 1 beschrieben werden. Zur Darstellung der Spezifik wird nun der oben beschriebene allgemeine Mähbalken 10 spezifisch als Mähbalken 10b bezeichnet.

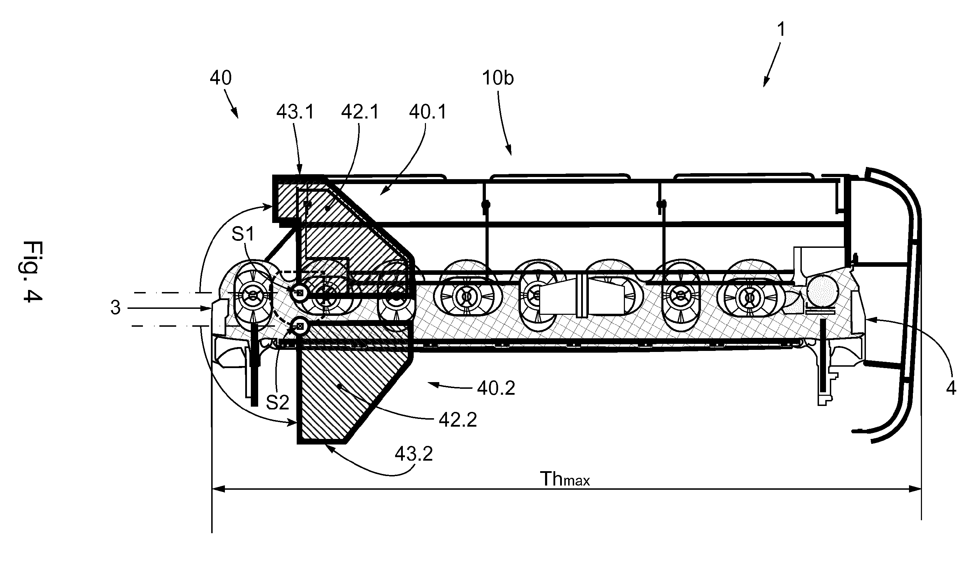

In der zweiten Ausführungsform der Erfindung ist die erste Schutzeinrichtung 40 zweiteilig ausgebildet. Wie aus den Figuren 3 und 4 ersichtlich, ist gemäß der zweiten Ausführungsform der Erfindung ein erster Schutzeinrichtungsteil 40.1 der ersten Schutzeinrichtung 40 um die sich winklig im Winkel W1 (siehe Fig.8) zur Arbeitsebene AE erstreckende Schwenkachse S1 schwenkbar am Rahmen 20 montiert, so dass der erste Schutzeinrichtungsteil 40.1 der ersten Schutzeinrichtung 40 um die Schwenkachse S1 zwischen der beim Arbeiten in der Arbeitsstellung einzunehmenden Schutzposition und der beim Transport in der Transportstellung des Mähbalkens 10b bzw. des Arbeitsgerätes 1 einzunehmenden Verstauposition verschwenkbar ist.

Die Schwenkachse S1 ist mit Abstand von der in der Schutzposition vollständig abgedeckten ersten Längsendenseite 3 am Rahmen 20 angeordnet sowie in Richtung der Länge des Rahmens 20 und zur ersten Längsendenseite 3 dessen hin in Bezug auf die Arbeitsebene AE winklig mit dem Winkel W1 von maximal 90 Grad angeordnet. Gemäß der zweiten Ausführungsform der Erfindung beträgt der Winkel W1, in dem die Schwenkachse S1 zur Arbeitsebene AE angeordnet ist, etwa 90 Grad.

Ein zweiter Schutzeinrichtungsteil 40.2 der ersten Schutzeinrichtung 40 ist um eine sich winklig im Winkel W1 (siehe Fig.8) zur Arbeitsebene AE erstreckende weitere Schwenkachse S2 schwenkbar am Rahmen 20 montiert, so dass der zweite Schutzeinrichtungsteil 40.2 der ersten Schutzeinrichtung 40 um die weitere Schwenkachse S2 zwischen der beim Arbeiten in der Arbeitsstellung einzunehmenden Schutzposition und der beim Transport in der Transportstellung des Mähbalkens 10b bzw. des Arbeitsgerätes 1 einzunehmenden Verstauposition verschwenkbar ist. Gemäß der zweiten Ausführungsform der Erfindung erstreckt sich die weitere Schwenkachse S2 in gleichem Winkel W1 wie die eine Schwenkachse S1 winklig zur Arbeitsebene AE. Zudem sind die beiden Schwenkachsen S1, S2 in Breitenrichtung des Mähbalkens 10b bzw. Fahrtrichtung FR gesehen in einer Linie angeordnet.

Durch die zweiteilige Ausführung der ersten Schutzeinrichtung 40 ist der erste obere Schutzabschnitt 42 von jeweiligen (zwei) Teilschutzsektionen 42.1 und 42.2 gebildet, die jeweils als flexible Materialbahn auf jeweilige Schutzbügel 41.1 bzw. 41.2 gespannt sind. Zudem ist der erste seitliche Schutzabschnitt 43 von jeweiligen (zwei) Teilschutzsektionen 43.1 und 43.2 gebildet, die jeweils als flexible Materialbahn an dem zugehörigen Schutzbügel 41.1 bzw. 41.2 freihängend befestigt sind.

Im Detail ist in der Schutzposition (Fig.3) der erste obere Schutzabschnitt 42 (die beiden Teilschutzsektionen 42.1, 42.2) über der von der ersten Flächenseite 2 abgewandten zweiten Flächenseite 5 des Mähbalkens 10b angeordnet. Außerdem ist in der Schutzposition der erste seitliche Schutzabschnitt 43 (die beiden Teilschutzsektionen 43.1, 43.2) mit dem ersten Sicherheitsabstand X1 von dem linksseitig äußeren Arbeitsorgan 31 bzw. der ersten Längsendenseite 3 seitlich neben dem Mähbalken 10b angeordnet, so dass der erste seitliche Schutzabschnitt 43 die erste Längsendenseite 3 vollständig abdeckt.

In der Verstauposition (Fig.4) ist der erste obere Schutzabschnitt 42 um 90 Grad um die Schwenkachsen S1, S2 zur Längsmitte des Mähbalkens 10b hin verschwenkt über der zweiten Flächenseite 5 des Mähbalkens 10a angeordnet. Genauer sind in der Verstauposition die beiden Teilschutzsektionen 42.1, 42.2 des ersten oberen Schutzabschnitts 42 um ihre jeweilige Schwenkachse S1 bzw. S2 in entgegengesetzte Drehrichtungen jeweils um 90 Grad verschwenkt.

Außerdem ist in der Verstauposition der erste seitliche Schutzabschnitt 43 unter Freigabe der ersten Längsendenseite 3 entlang der Länge des Rahmens 20 angeordnet, d.h. um 90 Grad um die Schwenkachsen S1, S2 zu den Längsseiten des Mähbalkens 10b geschwenkt. Genauer sind in der Verstauposition die beiden Teilschutzsektionen 43.1, 43.2 des ersten seitlichen Schutzabschnitts 43 um ihre jeweilige Schwenkachse S1 bzw. S2 in entgegengesetzte Drehrichtungen jeweils um 90 Grad verschwenkt.

Wie aus den Figuren 3, 4 und 9 ersichtlich, wird durch das Verschwenken der ersten Schutzeinrichtung 40 in die Verstauposition die Gesamtlänge des Mähbalkens 10b um den ersten Sicherheitsabstand X1 verkürzt, so dass unter Einhaltung einer maximalen Transporthöhe Thmax in der Transportstellung (siehe Fig. 9) des Mähbalkens 10b bzw. des Arbeitsgerätes 1 der Mähbalken 10b insgesamt Länger bzw. mit größerer Arbeitsbreite ausgeführt werden kann. Da die erste Schutzeinrichtung 40 auf der in der Transportstellung des als Heckmähwerk ausgebildeten Mähbalkens 10b des Arbeitsgerätes 1 unten angeordneten erste Längsendenseite 3 des Mähbalkens 10b vorgesehen ist, wird zudem in der Verstauposition verhindert, dass der erste seitliche Schutzabschnitt 43 bzw. dessen zwei Teilschutzsektionen 43.1, 43.2 unter zusätzlicher Verlängerung des Mähbalkens 10b nach unten hängen und ggf. auf einer Transportstraße schleifen.

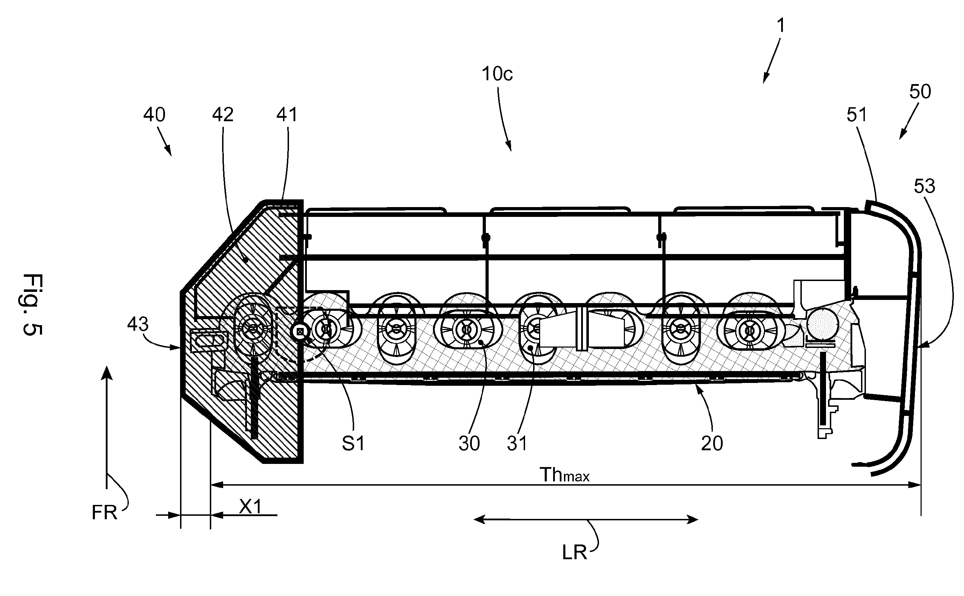

Nun wird unter Bezugnahme auf die Figuren 5, 6, 8 und 9 eine dritte Ausführungsform des erfindungsgemäßen landwirtschaftlichen Arbeitsgerätes 1 beschrieben werden. Zur Darstellung der Spezifik wird nun der oben beschriebene allgemeine Mähbalken 10 spezifisch als Mähbalken 10c bezeichnet.

Wie aus den Figuren 5, 6, 8 und 9 ersichtlich, ist gemäß der dritten Ausführungsform der Erfindung die erste Schutzeinrichtung 40 um die sich winklig im Winkel W1 (siehe Fig.8) zur Arbeitsebene AE erstreckende Schwenkachse S1 schwenkbar am Rahmen 20 montiert, so dass die erste Schutzeinrichtung 40 um die Schwenkachse S1 zwischen der beim Arbeiten in der Arbeitsstellung einzunehmenden Schutzposition und der beim Transport in der Transportstellung des Mähbalkens 10c bzw. des Arbeitsgerätes 1 einzunehmenden Verstauposition verschwenkbar ist.

Die Schwenkachse S1 ist mit Abstand von der in der Schutzposition vollständig abgedeckten ersten Längsendenseite 3 am Rahmen 20 angeordnet sowie in Richtung der Länge des Rahmens 20 und zur ersten Längsendenseite 3 dessen hin in Bezug auf die Arbeitsebene AE winklig mit dem Winkel W1 von maximal 90 Grad angeordnet. Gemäß der dritten Ausführungsform der Erfindung beträgt der Winkel W1, in dem die Schwenkachse S1 zur Arbeitsebene AE angeordnet ist, weniger als 90 Grad. Demgemäß ist die Schwenkachse S1 in Richtung der Länge des Rahmens 20 und zur ersten Längsendenseite 3 dessen hin in Bezug auf die Arbeitsebene AE in einem spitzen Winkel angeordnet.

Im Detail ist in der Schutzposition (Figuren 5 und 8) der erste obere Schutzabschnitt 42 über der zweiten Flächenseite 5 des Mähbalkens 10c angeordnet. Außerdem ist in der Schutzposition der erste seitliche Schutzabschnitt 43 mit dem ersten Sicherheitsabstand X1 von dem linksseitig äußeren Arbeitsorgan 31 bzw. der ersten Längsendenseite 3 seitlich neben dem Mähbalken 10c angeordnet, so dass der erste seitliche Schutzabschnitt 43 die erste Längsendenseite 3 vollständig abdeckt.

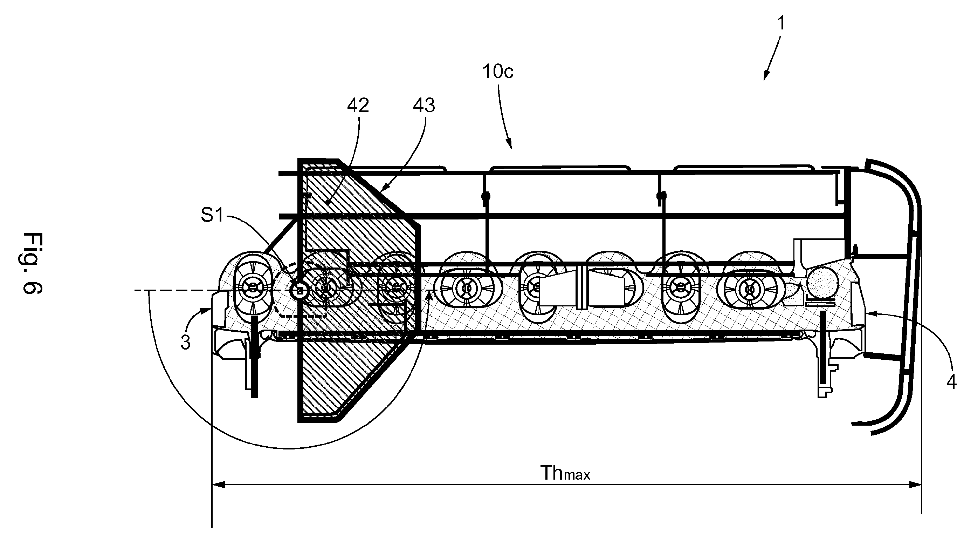

In der Verstauposition (Figuren 6 und 8) ist der erste obere Schutzabschnitt 42 um 180 Grad um die Schwenkachse S1 zur Längsmitte des Mähbalkens 10c hin verschwenkt über der zweiten Flächenseite 5 des Mähbalkens 10c angeordnet. Außerdem ist in der Verstauposition der erste seitliche Schutzabschnitt 43 unter Freigabe der ersten Längsendenseite 3 entlang der Länge des Rahmens 20 angeordnet, d.h. um 180 Grad um die Schwenkachse S1 über die zweite Flächenseite 5 des Mähbalkens 10c geschwenkt.

Wie aus den Figuren 5, 6, 8 und 9 ersichtlich, wird durch das Verschwenken der ersten Schutzeinrichtung 40 in die Verstauposition die Gesamtlänge des Mähbalkens 10c um den ersten Sicherheitsabstand X1 verkürzt, so dass unter Einhaltung einer maximalen Transporthöhe Thmax in der Transportstellung (siehe Fig. 9) des Mähbalkens 10c bzw. des Arbeitsgerätes 1 der Mähbalken 10c insgesamt länger bzw. mit größerer Arbeitsbreite ausgeführt werden kann. Da die erste Schutzeinrichtung 40 auf der in der Transportstellung des als Heckmähwerk ausgebildeten Mähbalkens 10c des Arbeitsgerätes 1 unten angeordneten erste Längsendenseite 3 des Mähbalkens 10c vorgesehen ist, wird zudem in der Verstauposition verhindert, dass der erste seitliche Schutzabschnitt 43 unter zusätzlicher Verlängerung des Mähbalkens 10c nach unten hängt und ggf. auf einer Transportstraße schleift.

Durch die spitzwinklige Anordnung (Winkel W1 kleiner 90 Grad) der Schwenkachse S1 in Bezug auf die Arbeitsebene AE bzw. die Flächenseiten 2, 5 ist nach Verschwenken der ersten Schutzeinrichtung 40 in die Verstauposition der Schutzbügel 41 ausgehend von der Schwenkachse schräg nach oben ausgerichtet, wodurch der erste seitliche Schutzabschnitt 43 um ein vorbestimmtes Hubmaß H1 (siehe Fig.8) angehoben wird. Dadurch ist der erste seitliche Schutzabschnitt 43 in der Verstauposition mit Abstand von den auf dieser Längenposition des Rahmens 20 befindlichen Arbeitsorganen 30, 31 angeordnet und kann somit leichter darüber geschwenkt werden und nicht versehentlich in die rotierenden Arbeitsorgane 30, 31 gelangen.

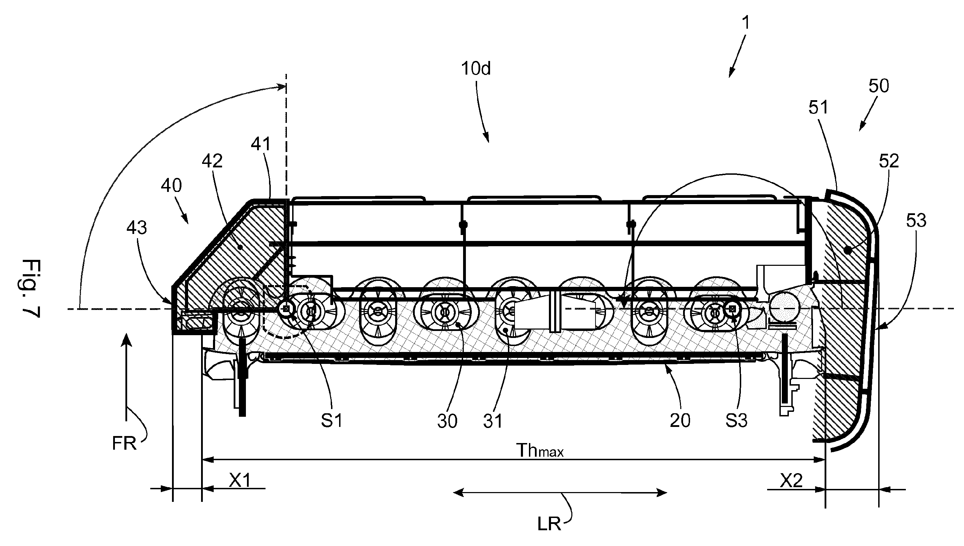

Nun wird unter Bezugnahme auf die Figuren 7, 8 und 9 eine vierte Ausführungsform des erfindungsgemäßen landwirtschaftlichen Arbeitsgerätes 1 beschrieben werden. Zur Darstellung der Spezifik wird nun der oben beschriebene allgemeine Mähbalken 10 spezifisch als Mähbalken 10d bezeichnet.

Wie aus den Figuren 7 und 9 ersichtlich, ist gemäß der vierten Ausführungsform der Erfindung die erste Schutzeinrichtung 40 um die sich winklig im Winkel W1 (siehe Fig.8) zur Arbeitsebene AE erstreckende Schwenkachse S1 schwenkbar am Rahmen 20 montiert, so dass die erste Schutzeinrichtung 40 um die Schwenkachse S1 zwischen der beim Arbeiten in der Arbeitsstellung einzunehmenden Schutzposition und der beim Transport in der Transportstellung des Mähbalkens 10d bzw. des Arbeitsgerätes 1 einzunehmenden Verstauposition verschwenkbar ist.

Die Schwenkachse S1 ist mit Abstand von der in der Schutzposition teilweise abgedeckten ersten Längsendenseite 3 am Rahmen 20 angeordnet sowie in Richtung der Länge des Rahmens 20 und zur ersten Längsendenseite 3 dessen hin in Bezug auf die Arbeitsebene AE winklig mit dem Winkel W1 von maximal 90 Grad angeordnet. Gemäß der vierten Ausführungsform der Erfindung beträgt der Winkel W1, in dem die Schwenkachse S1 zur Arbeitsebene AE angeordnet ist, etwa 90 Grad.

Im Detail ist in der Schutzposition (Fig.7) der erste obere Schutzabschnitt 42 über der zweiten Flächenseite 5 des Mähbalkens 10d angeordnet. Außerdem ist in der Schutzposition der erste seitliche Schutzabschnitt 43 mit dem ersten Sicherheitsabstand X1 von dem linksseitig äußeren Arbeitsorgan 31 bzw. der ersten Längsendenseite 3 seitlich neben dem Mähbalken 10d angeordnet, so dass der erste seitliche Schutzabschnitt 43 die erste Längsendenseite 3 teilweise abdeckt.

In der Verstauposition (gemäß dem Verschwenkpfeil in Fig.7) ist der erste obere Schutzabschnitt 42 um 90 Grad um die Schwenkachse S1 zur Längsmitte des Mähbalkens 10d hin verschwenkt über der zweiten Flächenseite 5 des Mähbalkens 10d angeordnet. Außerdem ist in der Verstauposition der erste seitliche Schutzabschnitt 43 unter Freigabe der ersten Längsendenseite 3 entlang der Länge des Rahmens 20 angeordnet, d.h. um 90 Grad um die Schwenkachse S1 an die eine Längsseite des Rahmens 20 bzw. des Mähbalkens 10d geschwenkt.

Wie aus Fig.7 ersichtlich, ist gemäß der vierten Ausführungsform der Erfindung die zweite Schutzeinrichtung 50 bezüglich der Schwenkbarkeit in gleicher bzw. ähnlicher Weise wie die erste Schutzeinrichtung 40 ausgebildet. Genauer ist die zweite Schutzeinrichtung 50 um eine sich winklig in einem Winkel W2 (siehe Fig.8) zur Arbeitsebene AE erstreckende Schwenkachse S3 schwenkbar am Rahmen 20 montiert, so dass die zweite Schutzeinrichtung 50 um die Schwenkachse S3 zwischen einer beim Arbeiten in der Arbeitsstellung einzunehmenden Schutzposition und einer beim Transport in der Transportstellung des Mähbalkens 10d bzw. des Arbeitsgerätes 1 einzunehmenden Verstauposition verschwenkbar ist.

Die Schwenkachse S3 ist mit Abstand von der in der Schutzposition vollständig abgedeckten zweiten Längsendenseite 4 am Rahmen 20 angeordnet sowie in Richtung der Länge des Rahmens 20 und zur zweiten Längsendenseite 4 dessen hin in Bezug auf die Arbeitsebene AE winklig mit dem Winkel W2 von maximal 90 Grad angeordnet. Gemäß der vierten Ausführungsform der Erfindung beträgt der Winkel W2, in dem die Schwenkachse S3 zur Arbeitsebene AE angeordnet ist, weniger als 90 Grad. Demgemäß ist die Schwenkachse S3 in Richtung der Länge des Rahmens 20 und zur zweiten Längsendenseite 4 dessen hin in Bezug auf die Arbeitsebene AE in einem spitzen Winkel angeordnet.

Im Detail ist in der Schutzposition (Figuren 7 und 8) der zweite obere Schutzabschnitt 52 über der zweiten Flächenseite 5 des Mähbalkens 10d angeordnet. Außerdem ist in der Schutzposition der zweite seitliche Schutzabschnitt 53 mit dem zweiten Sicherheitsabstand X2 von dem rechtsseitig äußeren Arbeitsorgan 31 bzw. der zweiten Längsendenseite 4 seitlich neben dem Mähbalken 10d angeordnet, so dass der zweite seitliche Schutzabschnitt 53 die zweite Längsendenseite 4 vollständig abdeckt.

In der Verstauposition (gemäß dem Verschwenkpfeil in Fig.7 und gemäß der in Strichlinie dargestellten Kontur in Fig.8) ist der zweite obere Schutzabschnitt 52 um 180 Grad um die Schwenkachse S3 zur Längsmitte des Mähbalkens 10d hin verschwenkt über der zweiten Flächenseite 5 des Mähbalkens 10d angeordnet. Außerdem ist in der Verstauposition der zweite seitliche Schutzabschnitt 53 unter Freigabe der zweiten Längsendenseite 4 entlang der Länge des Rahmens 20 angeordnet, d.h. um 180 Grad um die Schwenkachse S3 über die zweite Flächenseite 5 des Mähbalkens 10d geschwenkt.

Wie aus den Figuren 7, 8 und 9 ersichtlich, wird durch das Verschwenken der ersten Schutzeinrichtung 40 und der zweiten Schutzeinrichtung 50 in ihre jeweiligen Verstaupositionen die Gesamtlänge des Mähbalkens 10d um den ersten Sicherheitsabstand X1 und um den zweiten Sicherheitsabstand X2 verkürzt, so dass unter Einhaltung einer maximalen Transporthöhe Thmax in der Transportstellung (siehe Fig. 9) des Mähbalkens 10d bzw. des Arbeitsgerätes 1 der Mähbalken 10d insgesamt Länger bzw. mit größerer Arbeitsbreite ausgeführt werden kann.

Gleiches würde bei Ausführung des Arbeitsgerätes als einbalkiges nichtklappbares Frontmähwerk (frontseitig an der Arbeitsmaschine aufzunehmen) hinsichtlich der Einhaltung einer maximalen Transportbreite gelten. Mit anderen Worten würde durch das Verschwenken der ersten Schutzeinrichtung 40 und der zweiten Schutzeinrichtung 50 in ihre jeweiligen Verstaupositionen die Gesamtlänge des Mähbalkens 10d um den ersten Sicherheitsabstand X1 und um den zweiten Sicherheitsabstand X2 verkürzt werden, so dass unter Einhaltung einer maximalen Transportbreite in einer durch dieses Verschwenken erzielten Transportstellung der Mähbalken 10d insgesamt Länger bzw. mit größerer Arbeitsbreite ausgeführt werden könnte. Durch das nach innen Einschwenken der beiden Schutzeinrichtungen 40, 50 kann vorteilhaft auch ein seitliches Ausflattern der seitlichen Schutzabschnitte bzw. Schutztücher 43, 53 und damit eine Tranportbreitenvergrößerung und ggf. eine Gefahrenquelle vermieden werden.

Da gemäß der vierten Ausführungsform der Erfindung die erste Schutzeinrichtung 40 auf der in der Transportstellung des als Heckmähwerk ausgebildeten Mähbalkens 10d des Arbeitsgerätes 1 unten angeordneten erste Längsendenseite 3 des Mähbalkens 10d vorgesehen ist, wird in der Verstauposition verhindert, dass der erste seitliche Schutzabschnitt 43 unter zusätzlicher Verlängerung des Mähbalkens 10d nach unten hängt und ggf. auf einer Transportstraße schleift.

Durch die spitzwinklige Anordnung (Winkel W2 kleiner 90 Grad) der Schwenkachse S3 in Bezug auf die Arbeitsebene AE bzw. die Flächenseiten 2, 5 ist nach Verschwenken der zweiten Schutzeinrichtung 50 in die Verstauposition der Schutzbügel 51 ausgehend von der Schwenkachse S3 schräg nach oben ausgerichtet, wodurch der zweite seitliche Schutzabschnitt 53 um ein vorbestimmtes Hubmaß H2 (siehe Fig.8) angehoben wird. Dadurch ist der zweite seitliche Schutzabschnitt 53 in der Verstauposition mit Abstand von den auf dieser Längenposition des Rahmens 20 befindlichen Arbeitsorganen 30, 31 angeordnet und kann somit leichter darüber geschwenkt werden und nicht versehentlich in die rotierenden Arbeitsorgane 30, 31 gelangen.

Wie aus den vorhergehenden vier Ausführungsformen der Erfindung hervorgeht, können bei dem erfindungsgemäßen Arbeitsgerät 1 je nach Bedarf die erste Schutzvorrichtung 40 und/oder die zweite Schutzvorrichtung 50 vorgesehen sein. Jede dieser Schutzvorrichtungen 40, 50 kann um eine Schwenkachse schwenkbar sein, so dass sie in eine Verstauposition verbringbar ist, oder starr am Rahmen 20 befestigt sein. Jede dieser Schutzvorrichtungen 40, 50 kann einteilig oder mehrteilig ausgebildet sein. Außerdem kann jede dieser Schutzvorrichtungen 40, 50 die jeweilige Längsendenseite 3 bzw. 4 entweder teilweise oder vollständig abdecken.

Im Fazit wird durch die Erfindung ein landwirtschaftliches Arbeitsgerät zur Aufnahme an einer selbstfahrenden landwirtschaftlichen Arbeitsmaschine bereitgestellt, bei dem eine Schutzeinrichtung vorgesehen ist, welche für den Transportfall in einfacher Weise in eine abmessungsreduzierende Verstauposition verbringbar ist.

Eine erfindungsgemäße Schutzeinrichtung wirkt besonders vorteilhaft an Heckmähwerken und dabei besonders vorteilhaft an einer Längsendenseite, die an das Traggestell 6 angelenkt ist.

Durch die erfindungsgemäße Verschwenkung/Verdrehung lässt sich eine Schutzeinrichtung besonders vorteilhaft in eine Verstauposition verbringen, in der sie das Verschwenken der Mähbalken am Traggestell nicht behindert.

Eine erfindungsgemäße Schutzeinrichtung wirkt besonders vorteilhaft mit einem teleskopierbaren Lenker zusammen, mit welchem ein Mähbalken am Traggestell angebunden ist. Durch einen solchen teleskopierbaren Lenker kann der freiwerdende Schutzabschnitt dazu genutzt werden, einen Mähbalken bei vertikaler Transportposition abzusenken oder nach hinten geschwenkte Mähbalken näher an die Arbeitsmaschine heran zu ziehen. In beiden Fällen kann die Länge des freiwerdenden Sicherheitsabstands (X1, X2) genutzt werden, um die Transporthöhe bzw. die Transportlänge vorteilhaft zu reduzieren.

Unter einem Rahmen im Sinne der Erfindung ist ein tragendes Element zu verstehen, an welchem die Arbeitsorgane und Schutzeinrichtungen direkt oder mittelbar befestigt sind. Es kann ein unten- oder obenliegender Rahmen vorgesehen werden. Ebenso kann ein Arbeitsgerät, insbesondere ein Mähwerk als selbsttragende Konstruktion ausgeführt werden, an welcher die weiteren Bauteile befestigt sind. Darüber hinaus kann auch ein Tragrahmen vorgesehen werden, der die Arbeitsorgane - wie Mähbalken - und weitere Bauteile trägt.

Die vorstehend beschriebenen Schutzeinrichtungen 40, 50 können auch als selbsttragende Konstruktion aus Blech, Kunststoff oder Leichtbauwerkstoffen ausgeführt werden, wobei die in der Regel gesetzlich vorgeschriebene Abschirmung der Arbeitsorgane sichergestellt sein muss.

Besonders vorteilhaft ist es, die Schwenkachsen so anzuordnen, dass die jeweilige Schutzeinrichtung beim Verschwenken nicht oder nur unwesentlich über die Außenabmessungen des Arbeitsgerätes hinausragt. Dazu werden die Schwenkachsen vorzugsweise innerhalb des von der jeweiligen Schutzeinrichtung abgedeckten Schutzbereichs/-abschnitts angeordnet. Besonders vorteilhaft wirkt dies bei Frontmähwerken.

Die in den beschriebenen Ausführungsbeispielen sich winklig zur Arbeitsebene erstreckenden Schwenkachsen können prinzipiell sowohl in Richtung der Breitenränder als auch zusätzlich in Richtung der Längsränder des Arbeitsgeräts gegenüber den Drehachsen der Arbeitsorgane - wie insbesondere Mähscheiben oder Mähtrommeln - geneigt sein. Durch die räumliche Neigung einer Schwenkachse kann vorgegeben werden, wo sich eine Schutzeinrichtung hin bewegt, d.h. welche Verstauposition sie einnimmt. Dadurch kann der zur Verfügung stehende Raum optimal ausgenutzt werden und / oder eine Schutzeinrichtung kann in einen Bereich verschwenkt werden wo sie während des Transports am wenigsten stört.

Bei Ausführungsbeispielen mit zweiteiligen Schutzeinrichtungen müssen die Schwenkachsen nicht zwingend - wie beispielsweise in Fig. 3, 4 - in einer Linie und/oder mit dem gleichen Winkel gegen die Arbeitsebene geneigt sein. Es ist möglich, die Schwenkachsen frei zu platzieren und mit unterschiedlichen Winkeln gegenüber der Arbeitsebene auszurichten. Bei entsprechender Anordnung und Neigung der Schwenkachsen, können die Schutzeinrichtungen beispielsweise beide in die gleiche Richtung in eine Verstauposition verschwenkt werden und dabei ggf. auch ineinander bzw. hintereinander liegend angeordnet einen Freiraum optimal nutzen.

### Bezugszeichenliste

- 1: Arbeitsgerät
- 2: Flächenseite
- 3,4: Längsendenseite
- 5: Flächenseite
- 6: Traggestell
- 10: Mähbalken
- 10a, 10b: Mähbalken
- 10c, 10d: Mähbalken
- 20: Rahmen
- 30, 31: Arbeitsorgan
- 40: Schutzeinrichtung
- 40.1, 40.2: Schutzeinrichtungsteil
- 41: Schutzbügel
- 41.1, 41.2: Schutzbügel
- 42: Schutzabschnitt
- 42.1, 42.2: Teilschutzsektion
- 43: Schutzabschnitt
- 43.1, 43.2: Teilschutzsektion
- 50: Schutzeinrichtung
- 51: Schutzbügel
- 52: Schutzabschnitt
- 53: Schutzabschnitt
- AE: Arbeitsebene
- S1, S2, S3: Schwenkachse
- X1, X2: Sicherheitsabstand
- H1, H2: Hubmaß
- W1, W2: Winkel
- FR: Fahrtrichtung
- LR: Längsrichtung
- Thmax: maximale Transporthöhe

## Patentansprüche

1. Landwirtschaftliches Mähwerk (1) mit:
einem länglichen Rahmen (20), der so eingerichtet ist, dass er von einer landwirtschaftlichen Arbeitsmaschine aufnehmbar ist,
einer Mehrzahl von Arbeitsorganen (30, 31), die über die Länge des Rahmens (20) verteilt an diesem gehalten sind, so dass sie eine parallel zur ersten Flächenseite (2) verlaufende Arbeitsebene (AE) definieren, und
einer Schutzeinrichtung (40, 50),
**dadurch gekennzeichnet, dass** die Schutzeinrichtung (40, 50) um eine sich winklig zur Arbeitsebene
(AE) erstreckende Schwenkachse (S1, S2, S3) schwenkbar am Rahmen (20) montiert ist, so dass ein Schutzabschnitt (43, 53) der Schutzeinrichtung (40, 50) zwischen einer Schutzposition, in der der Schutzabschnitt (43, 53) eine mit Breitenrändern und Höhenrändern des Rahmens (20) definierte Längsendenseite (3, 4) des Arbeitsgerätes (1) zumindest teilweise abdeckt, und einer Verstauposition verschwenkbar ist, in der der Schutzabschnitt (43, 53) unter Freigabe der Längsendenseite (3, 4) entlang der Länge des Rahmens (20) angeordnet ist.

2. Mähwerk (1) gemäß Anspruch 1, wobei der Schutzabschnitt (43, 53) an der Schwenkachse (S1, S2, S3) so verschwenkbar ist, dass er in der Verstauposition an eine Längsseite des Rahmens (20) geschwenkt ist.

3. Mähwerk (1) gemäß Anspruch 1, wobei der Schutzabschnitt (43, 53) an der Schwenkachse (S1, S3) so verschwenkbar ist, dass er in der Verstauposition über eine von der ersten Flächenseite (2) abgewandte mit Längsrändern und Breitenrändern des Rahmens (20) definierte zweite Flächenseite (5) des Arbeitsgerätes (1) geschwenkt ist.

4. Mähwerk (1) gemäß Anspruch 3, wobei der Schutzabschnitt (43, 53) an der Schwenkachse (S1, S3) so verschwenkbar ist, dass er in der Verstauposition mit Abstand von den auf dieser Längenposition des Rahmens befindlichen Arbeitsorganen (30, 31) angeordnet ist.

5. Mähwerk (1) gemäß einem der Ansprüche 1 bis 4, wobei die Schwenkachse (S1, S2, S3) mit Abstand von der in der Schutzposition zumindest teilweise abgedeckten Längsendenseite (3, 4) am Rahmen (20) angeordnet ist sowie in Richtung der Länge des Rahmens (20) und zur Längsendenseite (3, 4) dessen hin in Bezug auf die Arbeitsebene (AE) winklig mit einem Winkel (W1, W2) von maximal 90 Grad angeordnet ist.

6. Mähwerk (1) gemäß Anspruch 5, wobei die Schwenkachse (S1, S3) in Richtung der Länge des Rahmens (20) und zur Längsendenseite (3, 4) dessen hin in Bezug auf die Arbeitsebene (AE) in einem spitzen Winkel (W1, W2) angeordnet ist.

7. Mähwerk (1) gemäß einem der Ansprüche 1 bis 6, wobei der Schutzabschnitt (43) der Schutzeinrichtung (40) in einer Breitenrichtung des Rahmens (20) geteilt ist, so dass zwei Teilschutzsektionen (43.1, 43.2) gebildet sind, von denen eine Teilschutzsektion (43.1) um die eine Schwenkachse (S1) schwenkbar am Rahmen (20) montiert ist und die andere Teilschutzsektion (43.2) um eine weitere Schwenkachse (S2) schwenkbar am Rahmen (20) montiert ist.

8. Mähwerk (1) gemäß Anspruch 7, wobei die beiden Schwenkachsen (S1, S2) in Breitenrichtung gesehen in einer Linie angeordnet sind.

9. Mähwerk (1) gemäß einem der Ansprüche 1 bis 8, mit einer weiteren Schutzeinrichtung (50, 40), die in gleicher Weise wie die eine Schutzeinrichtung (40, 50) ausgebildet um eine sich winklig zur Arbeitsebene (AE) erstreckende Schwenkachse (S3, S2, S1) schwenkbar am Rahmen (20) montiert ist, so dass ein Schutzabschnitt (53, 43) der weiteren Schutzeinrichtung (50, 40) zwischen einer Schutzposition, in der der Schutzabschnitt (53, 43) eine mit Breitenrändern und Höhenrändern des Rahmens (20) definierte weitere Längsendenseite (4, 3) des Arbeitsgerätes (1) zumindest teilweise abdeckt, und einer Verstauposition verschwenkbar ist, in der Schutzabschnitt (53, 43) unter Freigabe der weiteren Längsendenseite (4, 3) entlang der Länge des Rahmens (20) angeordnet ist.

10. Mähwerk (1), gemäß einem der Ansprüche 1 bis 9, wobei der längliche Rahmen (20) zwischen einer Arbeitsstellung zum Durchführen landwirtschaftlicher Feldarbeit und einer Transportstellung zum Transportieren des Arbeitsgerätes (1) verschwenkbar ist, und wobei die Schutzeinrichtung (40) am Rahmen (20) an dem zur Anlenkung an
der Arbeitsmaschine vorgesehenen Längsende montiert ist und zwischen der Schutzposition zum Bereitstellen einer Abschirmung in der Arbeitsstellung für die an diesem Längsende angeordneten Arbeitsorgane (31) und unter zumindest teilweiser Aufhebung dieser Abschirmung der Verstauposition für die
Transportstellung verlagerbar ist.

## Claims

1. An agricultural mowing apparatus (1) comprising:
an elongate frame (20) which is so adapted that it can be mounted by an agricultural working machine,
a plurality of working members (30, 31) which are held to the frame (20) distributed over the length thereof so that they define a working plane (AE) extending parallel to the first surface side (2), and
a protection device (40, 50),
**characterised in that** the protection device (40, 50) is mounted to the frame (20) pivotably about a pivot axis (S1, S2, S3) extending in angled relationship with the working plane (AE), so that a protection portion (43, 53) of the protection device (40, 50) is pivotable between a protection position in which the protection portion (43, 53) at least partially covers a longitudinal end side (3, 4) of the working implement (1), defined with width edges and height edges of the frame (20), and a stowage position in which the protection portion (43, 53) is arranged along the length of the frame (20) with the longitudinal end side (3, 4) being cleared.

2. A mowing apparatus (1) according to claim 1 wherein the protection portion (43, 53) is pivotable at the pivot axis (S1, S2, S3) in such a way that in the stowage position it is pivoted to a longitudinal side of the frame (20).

3. A mowing apparatus (1) according to claim 1 wherein the protection portion (43, 53) is pivotable at the pivot axis (S1, S3) in such a way that in the stowage position it is pivoted over a second surface side (5) of the working implement (1) that faces away from the first surface side (2) and is defined with longitudinal edges and width edges of the frame (20).

4. A mowing apparatus (1) according to claim 3 wherein the protection portion (43, 53) is pivotable at the pivot axis (S1, S3) in such a way that in the stowage position it is arranged at a spacing from the working members (30, 31) which are disposed on said longitudinal position of the frame.

5. A mowing apparatus (1) according to one of claims 1 to 4 wherein the pivot axis (S1, S2, S3) is arranged on the frame (20) at a spacing from the longitudinal end side (3, 4) which is at least partially covered in the protection position and is arranged in the direction of the length of the frame (20) and in angular relationship with an angle (W1, W2) of a maximum of 90 degrees towards the longitudinal end side (3, 4) of the frame in relation to the working plane (AE).

6. A mowing apparatus (1) according to claim 5 wherein the pivot axis (S1, S3) is arranged in the direction of the length of the frame (20) and at an acute angle (W1, W2) towards the longitudinal end side (3, 4) of the frame in relation to the working plane (AE).

7. A mowing apparatus (1) according to one of claims 1 to 6 wherein the protection portion (43) of the protection device (40) is divided in a width direction of the frame (20) so that two partial protection sections (43.1, 43.2) are formed, of which one partial protection section (43.1) is mounted to the frame (20) pivotably about the one pivot axis (S1) and the other partial protection section (43.2) is mounted to the frame (20) pivotably about a further pivot axis (S2).

8. A mowing apparatus (1) according to claim 7 wherein the two pivot axes (S1, S2) are arranged in a line as viewed in the width direction.

9. A mowing apparatus (1) according to one of claims 1 to 8 with a further protection device (50, 40) which of the same structure as the one protection device (40, 50) is mounted to the frame (20) pivotably about a pivot axis (S3, S2, S1) extending in angled relationship with the working plane (AE) so that a protection portion (53, 43) of the further protection device (50, 40) is pivotable between a protection position in which the protection portion (53, 43) at least partially covers a further longitudinal end side (4, 3) of the working implement (1), that is defined with width edges and height edges of the frame (20), and a stowage position in which the protection portion (53, 43) is arranged along the length of the frame (20) with the further longitudinal end side (4, 3) being cleared.

10. A mowing apparatus (1) according to one of claims 1 to 9 wherein the elongate frame (20) is pivotable between a working position for carrying out agricultural field work and a transport position for transportation of the working implement (1), and wherein the protection device is mounted to the frame (20) at the longitudinal end provided for pivotal mounting to the working machine and is displaceable between the protection position for providing a guard effect in the working position for the working members (31) arranged at said longitudinal end and the stowage position for the transport position with said guard effect being at least partially removed.

## Revendications

1. Faucheuse agricole (1) comprenant un châssis allongé (20) conçu de manière à pouvoir être supporté par une machine de travail agricole, une pluralité d'organes de travail (30, 31) répartis sur la longueur du châssis (20) et maintenus sur celui-ci de façon à définir un plan de travail (AE) s'étendant parallèlement à une première face (2), et un dispositif de protection (40, 50), **caractérisée en ce que** le dispositif de protection (40, 50) est monté pivotant sur le châssis (20) autour d'un axe de pivotement (S1, S2, S3) s'étendant angulairement par rapport au plan de travail (AE), de façon qu'une partie de protection (43, 53) du dispositif de protection (40, 50) puisse pivoter entre une position de protection, dans laquelle la partie de protection (43, 53) recouvre au moins partiellement un côté d'extrémité longitudinale (3, 4)' de l'appareil de travail (1) défini par des bords transversaux et des bords verticaux du châssis (20), et une position de rangement dans laquelle la partie de protection (43, 53) est disposée suivant la longueur du châssis (20) en dégageant le côté d'extrémité longitudinale (3, 4).

2. Faucheuse (1) selon la revendication 1, dans laquelle la partie de protection (43, 53) peut pivoter sur l'axe de pivotement (S1, S2, S3) de façon que, dans la position de rangement, elle soit basculée le long d'un côté longitudinal du châssis (20).

3. Faucheuse (1) selon la revendication 1, dans laquelle la partie de protection (43, 53) peut pivoter sur l'axe de pivotement (S1, S3) de façon que, dans la position de rangement, elle soit basculée au-dessus d'une deuxième face (5) de l'appareil de travail (1) opposée à la première face (2), définie par des bords longitudinaux et des bords transversaux du châssis (20).

4. Faucheuse (1) selon la revendication 3, dans laquelle la partie de protection (43, 53) peut pivoter sur l'axe de pivotement (S1, S3) de façon que, dans la position de rangement, elle soit disposée à distance des organes de travail (30, 31) se trouvant dans cette position longitudinale du châssis.

5. Faucheuse (1) selon l'une des revendications 1 à 4, dans laquelle l'axe de pivotement (S1, S2, S3) est disposé sur le châssis (20) à distance du côté d'extrémité longitudinale (3, 4) recouvert au moins partiellement dans la position de protection ainsi que disposé dans la direction de la longueur du châssis (20) et incliné vers le côté d'extrémité longitudinale (3, 4) de celui-ci en formant un angle (W1, W2) d'au plus 90 degrés par rapport au plan de travail (AE).

6. Faucheuse (1) selon la revendication 5, dans laquelle l'axe de pivotement (S1, S3) est disposé dans la direction de la longueur du châssis (20) et s'étend vers le côté d'extrémité longitudinale (3, 4) de celui-ci en formant un angle aigu (W1, W2) par rapport au plan de travail (AE).

7. Faucheuse (1) selon l'une des revendications 1 à 6, dans laquelle la partie de protection (43) du dispositif de protection (40) est divisée dans une direction transversale du châssis (20), de façon que deux sections de protection partielles (43.1, 43.2) soient formées, une section de protection partielle (43.1) étant montée pivotante sur le châssis (20) autour d'un axe de pivotement (S1) et l'autre section de protection partielle (43.2) étant montée pivotante sur le châssis (20) autour d'un autre axe de pivotement (S2).

8. Faucheuse (1) selon la revendication 7, dans laquelle, par rapport à la direction transversale, les deux axes de pivotement (S1, S2) sont disposés sur une ligne.

9. Faucheuse (1) selon l'une des revendications 1 à 8, comprenant un autre dispositif de protection (50, 40) qui, de la même manière que le dispositif de protection (40, 50), est monté pivotant sur le châssis (20) autour d'un axe de pivotement (S3, S2, S1) s'étendant angulairement par rapport au plan de travail (AE), de façon qu'une partie de protection (53, 43) de l'autre dispositif de protection (50, 40) puisse pivoter entre une position de protection, dans laquelle la partie de protection (53, 43) recouvre au moins partiellement un côté d'extrémité longitudinale (4, 3) de l'appareil de travail (1) défini par des bords transversaux et des bords verticaux du châssis (20), et une position de rangement dans laquelle la partie de protection (53, 43) est disposée suivant la longueur du châssis (20) en dégageant le côté d'extrémité longitudinale (4, 3).

10. Faucheuse (1) selon l'une des revendications 1 à 9, dans laquelle le châssis allongé (20) peut pivoter entre une position de travail pour effectuer un travail agricole dans les champs et une position de transport pour transporter l'outil de travail (1), et dans laquelle le dispositif de protection (40) est monté sur le châssis (20) à l'extrémité longitudinale prévue pour l'articulation sur la machine de travail et est déplaçable entre une position de protection fournissant un blindage dans la position de travail pour les organes de travail (31) disposés à cette extrémité longitudinale et une position de rangement pour la position de transport, dans laquelle ce blindage est partiellement supprimé.
